# EUROPEAN PATENT SPECIFICATION

(11) **EP 2 292 128 B1**
(45) Date of publication and mention of the grant of the patent: **25.01.2012**
(21) Application number: 09011428.1
(22) Date of filing: 07.09.2009
(51) Int. Cl.: A47J 37/06

(54) **Inner pot assembly for hot-air baking oven and hot-air baking oven having such assembly**
Innentopfeinheit für Heißluftbackofen und Heißluftbackofen mit einer solchen Einheit
Ensemble de pot interne pour four de cuisson à air chaud et four de cuisson à air chaud en disposant

(43) Date of publication of application: 09.03.2011
(73) Proprietor: Tall & Stout Industrial Corp., Banchiau City Taipei 220 (TW)
(72) Inventor: Kuei-Tang, Chang, Banchlau City Taipei 220 (TW)
(74) Representative: Blasberg, Tilo

(56) References cited:
- EP-A- 0 284 420
- WO-A-2006/000700
- DE-A1- 2 102 062
- US-A- 5 590 583
- US-A1- 2005 011 370

## Description

### BACKGROUND OF THE INVENTION

### 1. Field of the Invention

The present invention relates to a hot-air baking oven, and in particular to an inner pot assembly for a hot-air baking oven.

### 2. Description of Prior Art

With the advancement of technology, various kinds of electrical appliances are used in a house to promote the domestic life. In addition to a microwave oven and a toaster, a hot-air baking oven is developed, which includes a pot, a cover and an electric heating module. The interior of the pot is formed into a cooking chamber for receiving food items. The cover is usually made of glass through which a user can observe the cooking condition of the food items received in the pot. The electric heating module generates high-temperature airflow and blows it into the pot. By means of the convection of the high-temperature airflow, the food items can be baked.

However, in practice, such a hot-air baking oven still has some problems. When the user intends to bake a number of small-sized food items (such as potato strips) in this hot-air baking oven, only the outer part of the potato strips are completely baked by the high-temperature airflow, but the inner part of the potato strips are not baked sufficiently because they are blocked by the outer part of the potato strips so as to unable to contact the high-temperature airflow sufficiently. In order to solve this problem, the user has to stir the potato strips periodically to make all of the potato strips to be baked uniformly.

However, it is inconvenient for the user to stir the food items periodically, and thus the range of the food items to which the aforesaid hot-air baking oven can be applied is restricted.

Therefore, it is an important issue for the present Inventor to solve the above-mentioned problems.

DE 21 02 062 A1 discloses a method and apparatus for cooking of food. The apparatus comprises an inner pot assembly for a hot-air baking oven, having a container body with its bottom having a shaft mount; a rotatable mechanism penetrating the shaft mount to be rotatable with respect to the shaft mount; a speed-reducing mechanism fixed to the container body, the speed-reducing mechanism having a speed-reducing gear set in mutual transmission with the rotatable mechanism; and a stirring member connected to the rotatable mechanism and received in the container body, wherein the stirring member is driven by the rotatable mechanism. The range of the food items to which the aforesaid hot-air baking oven can be applied is, however, restricted due to the above constrictions.

US 5,590,583 discloses an appliance which includes an inner compartment with one zone in which uncooked bagels can be boiled and a second zone for subsequently baking the boiled bagels. The same appliance can also be used to make bagel doughs and to both make and bake other yeast doughs.

WO 2006/000700 A2 discloses a domestic cooking appliance comprising a means for receiving bulk food items and a heating means comprising a means for generating an air flow, wherein the means for generating an air flow comprises an air outlet and an air inlet.

US 200510011370 A1 discloses an automatic frying apparatus for both deep and shallow frying.

EP 0 284 420 A1 discloses a microwave heating apparatus comprising a closable container which has an inner container to receive the food product and which has an internal fan. The closable container is placed in a microwave oven so that the food product can be heated by microwave energy, and a microwave absorber is provided in the closable container to heat air circulated by the fan so that the food product can also be heated by convection.

### SUMMARY OF THE INVENTION

It is an object of the present invention to provide an improved inner pot assembly for a hot-air baking oven, enabling a broad range of food items to which the hot-air baking oven can be applied, and a hot-air baking oven having such an inner pot assembly.

These problems are solved by an inner pot assembly according to claim 1 and by a hot-air baking oven according to claim 5, Further advantageous embodiments are the subject-matter of the dependent claims.

A speed-reducing mechanism is provided in the inner pot assembly to drive a stirring member to stir the food items received in the hot-air baking oven, thereby making all the food items to be baked completely.

According to the present invention there is provided an inner pot assembly for a hot-air baking oven, which includes a container body, a rotatable sleeve, a driven shaft, a speed-reducing mechanism and a stirring member. The bottom of the container body has a shaft mount. The rotatable sleeve penetrates the shaft mount to be rotatable with respect to the shaft mount. The driven shaft penetrates the rotatable sleeve to be rotatable with respect to the rotatable sleeve. The speed-reducing mechanism is fixed to the container body and has a speed-reducing gear set driven by the driven shaft and driving the rotatable sleeve to rotate. The stirring member is connected to the rotatable sleeve and received in the container body. The stirring member is driven by the rotatable sleeve.

According to the present invention there is also provided a hot-air baking oven having an inner pot assembly, which includes an outer pot, a heating device and an inner pot assembly. The outer pot is formed with a chamber. The heating device has a cover plate covering the outer pot and a motor mounted over the cover plate. The motor has a driving spindle. The inner pot assembly is received in the chamber and includes a container body, a rotatable sleeve, a driven shaft, a speed-reducing mechanism and a stirring member. The bottom of the container body has a shaft mount. The rotatable sleeve penetrates the shaft mount to be rotatable with respect to the shaft mount. The driven shaft penetrates the rotatable sleeve to be rotatable with respect to the rotatable sleeve. The speed-reducing mechanism is fixed to the container body and has a speed-reducing gear set driven by the driven shaft and driving the rotatable sleeve to rotate. The stirring member is connected to the rotatable sleeve and received in the container body. The stirring member is driven by the rotatable sleeve.

In comparison with prior art, the present invention has advantageous features as follows:

Since the inner pot assembly of the present invention is provided with the driven shaft, the speed-reducing mechanism and the stirring member, and the driven shaft is driven by the driving spindle of the motor of the heating device, it is not necessary to provide an additional motor to drive the driven shaft. Further, the speed-reducing mechanism drives the rotatable sleeve at low speed to rotate, and the rotatable sleeve drives the stirring member to stir the food items received in the inner pot assembly, so that the food items can be baked uniformly.

Since the inner pot assembly of the present invention is detachably connected between the heating device and the outer pot of the hot-air baking oven, the inner pot assembly is needed only when the user intends to bake a plurality of small-sized food items such as potato strips. In other words, when the inner pot assembly is not used, the outer pot and the heating device of the hot-air baking oven can still cooperate to bake a large-size food item. Thus, the hot-air baking oven having an inner pot assembly according to the present invention can bake a large range of food items, which increases the practicability of the hot-air baking oven.

### BRIEF DESCRIPTION OF THE DRAWINGS

FIG. 1 is a perspective view showing the external appearance of the inner pot assembly of the present invention;
FIG 2 is a cross-sectional view showing the inner pot assembly of the present invention;
FIG 3 is an exploded cross-sectional view showing the hot-air baking oven of the present invention.
FIG 4 is an exploded view showing the driving spindle, the coupler and the driven shaft of the present invention;
FIG. 5 is an assembled cross-sectional view showing the inner pot assembly, the coupler and the driving spindle;
FIG. 6 is an assembled cross-sectional view showing the hot-air baking oven of the present invention;
FIG. 7 is an assembled cross-sectional view showing the operating state of the hot-air baking oven of the present invention; and
FIG. 8 is an exploded view showing another embodiment of the driving spindle and the driven shaft of the present invention.

### DETAILED DESCRIPTION OF THE INVENTION

The characteristics and technical contents of the present invention will be explained with reference to the accompanying drawings. However, the drawings are illustrative only but not used to limit the present invention.

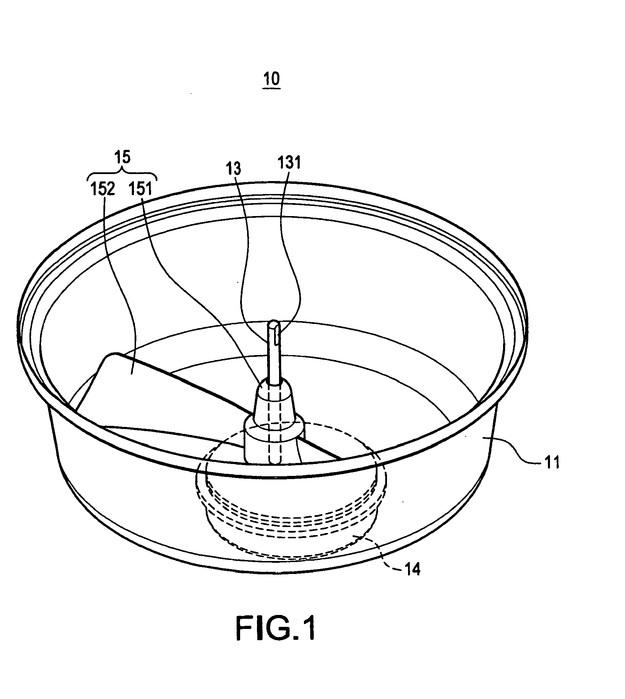

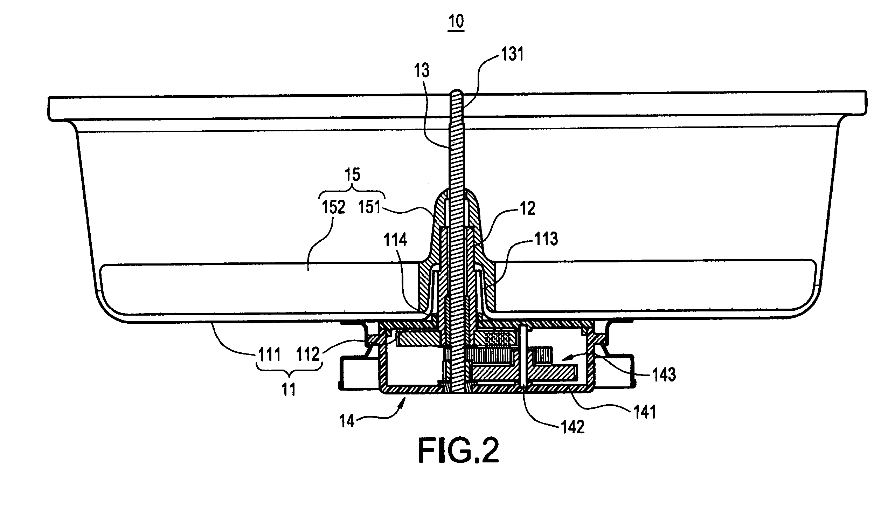

Please refer to FIGS. 1 and 2. The present invention provides an inner pot assembly for a hot-air baking oven. The inner pot assembly 10 includes a container body 11, a rotatable sleeve 12, a driven shaft 13, a speed-reducing mechanism 14 and a stirring member 15.

In the present embodiment, the container body 11 is formed of a cylinder 111 having a closed end and a base plate 112 fixed to the bottom surface of the cylinder 111. The center of the bottom of the cylinder 111 is formed into a hollow post 113. Further, the base plate 112 is formed with a shaft mount 114 at a position corresponding to that of the hollow post 113.

The rotatable sleeve 12 has a stepped profile, and it penetrates the hollow post 113 to be pivotally connected with the shaft mount 114 and rotatable with respect to the shaft mount 114.

The driven shaft 13 is an elongate rod, which penetrates the rotatable sleeve 12 to be rotatable with respect to the rotatable sleeve 12. A free end of the driven shaft 13 protruding outside the rotatable sleeve 12 is formed with a positioning plane 131. Alternatively, the rotatable sleeve 12 and the driven shaft 13 in the present embodiment can be assembled together to form a rotatable mechanism.

The speed-reducing mechanism 14 comprises a casing 141, two pivots 142 and a speed-reducing gear set 143. The casing 141 is used to seal the base plate 112 and allows the bottom end of the driven shaft 13 to be supported therein. Both ends of each pivot 142 are pivotally connected to the casing 141 and the base plate 112. The speed-reducing gear set 143 is constituted of a plurality of gears and idle wheels with different diameters. One of the gears is fixed to the bottom end of the driven shaft 13, and the other gear is fixed to the rotatable sleeve 12. The intermediate idle wheels are connected to the pivots 142 respectively. With the gear speed ratios among the gears and the idle wheels, the speed-reducing mechanism 14 can reduce the speed ratio between the driven shaft 13 and the rotatable sleeve 12.

The stirring member 15 is constituted of a central base 151 and a plurality of blades 152 extending outwards from the central base 151. The central base 151 is fixedly connected to the rotatable sleeve 12, so that the stirring member 15 can be driven by the rotatable sleeve 12 and rotatable therewith.

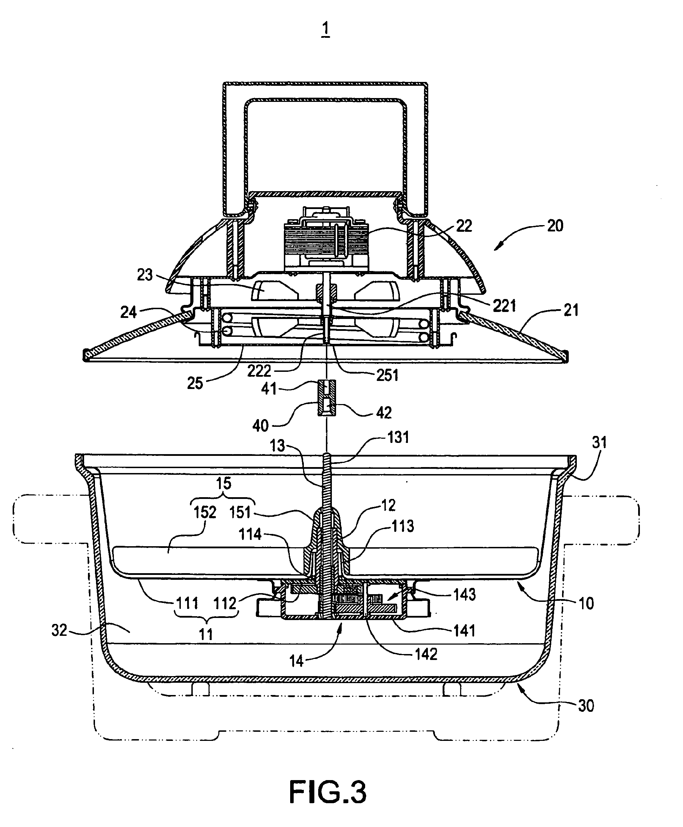

Please refer to FIG. 3. The present invention further provides a hot-air baking oven having an inner pot assembly. The hot-air baking oven 1 includes an inner pot assembly 10, a heating device 20 and an outer pot 30.

In the present embodiment, the heating device 20 is an electric heating device for generating hot airflow, which includes a cover plate 21, a motor 22, two impellers 23, an electric heating tube 24 and a protection plate 25. The cover plate 21covers above the cylinder 111 of the inner pot assembly 10. The motor 22 is mounted to the center of the cover plate 21. The center of the motor 22 extends to have a driving spindle 221. The distal end of the driving spindle 221 is formed with an outer thread 222. The two impellers 23 are separated from each other in the vertical direction and are fixed to the middle section of the driving spindle 221 respectively. The electric heating tube 24 is fixed to the cover plate 21 to surround the lower impeller 23. The protection plate 25 is fixed inside the cover plate 21 at a position corresponding to the lower impeller 23 and the electric heating tube 24. The protection plate 25 is provided with a through-hole 251 for allowing the driving spindle 221 to penetrate there through. Further, the protection plate 25 is provided with a plurality of venting holes (not shown) at the area excluding the through-hole 251.

The outer pot 30 is also a cylinder having a closed end. The rim of the outer pot 30 is formed with a flange 31 for supporting the cylinder 111 of the container body 11. The interior of the outer pot 30 is formed with a chamber 32 for allowing the inner pot assembly 10 to be disposed therein.

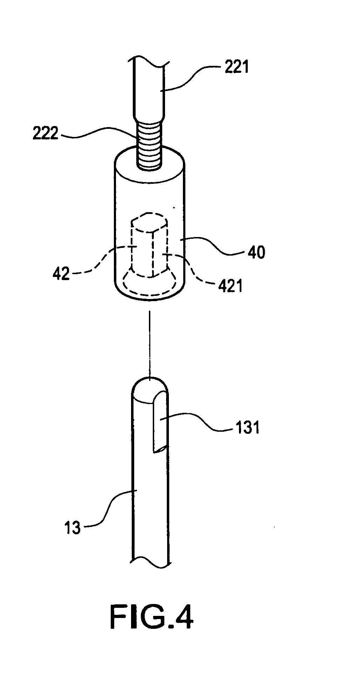

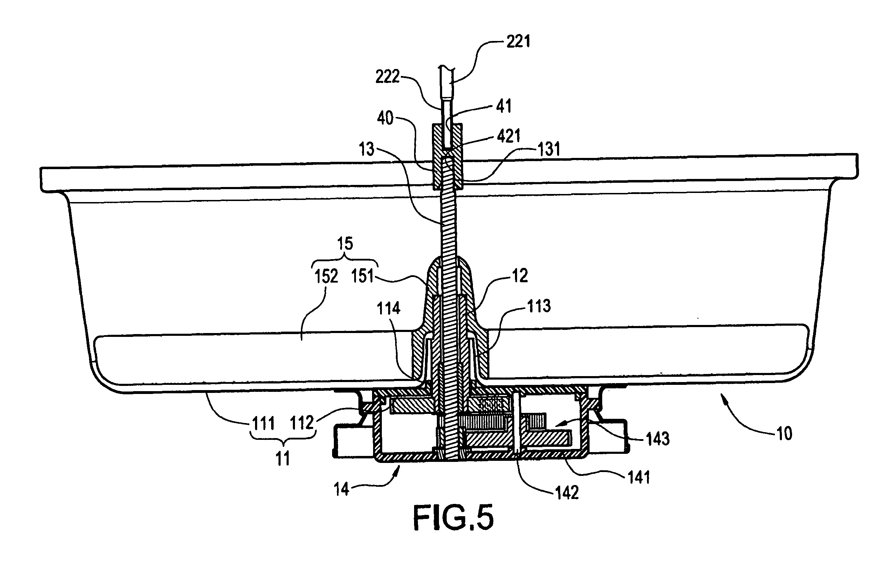

Please refer to FIGS. 4 and 5. The hot-air baking oven 1 further includes a coupler 40. The upper portion of the coupler 40 is provided with an inner thread 41 for threadedly connecting with the outer thread 222 of the driving spindle 221. The lower portion of the coupler 40 is provided with an insertion hole 42 for allowing the driven shaft 13 to be inserted therein. The inner wall of the insertion hole 42 is formed with a restricting plane 421 for mating with the positioning plane 131 of the driven shaft 13. With the arrangement, the driven shaft 13 can be driven by the coupler 40 to rotate therewith.

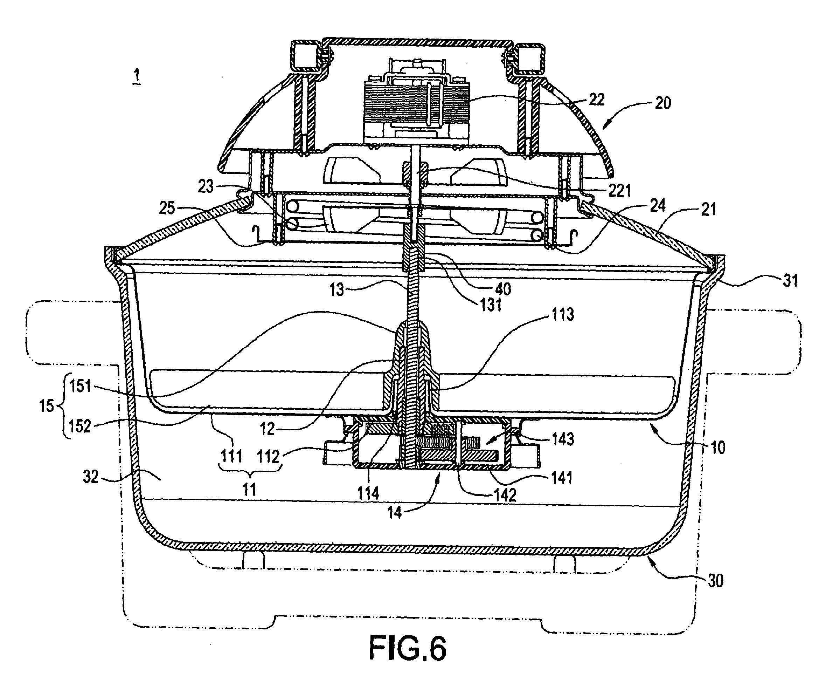

Please refer to FIG. 6. When in use, the coupler 40 first penetrates the through-hole 251 of the protection plate 25 with the inner thread 41 of the coupler 40 being threadedly connected with the outer thread 222 of the driving spindle 221. Next, the inner pot assembly 10 is disposed in the chamber 32 of the outer pot 30, and the inner pot assembly 10 is supported by the flange 31 of the outer pot 30 at a proper height. Then, the cover plate 21 of the heating device 20 covers the container body 11 of the inner pot assembly 10 in such a manner that the insertion hole 42 of the coupler 40 is inserted by the driven shaft 13 and the positioning plane 131 of the driven shaft 13 mates with the restricting plane 421 of the insertion hole 42. In this way, the hot-air baking oven 1 can be assembled together.

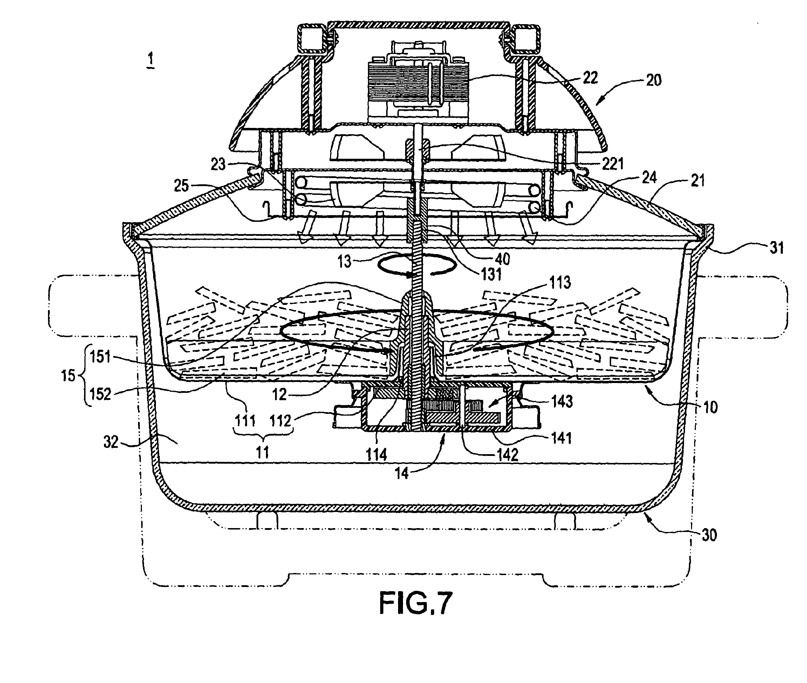

Please refer to FIG. 7. When in use, the food items to be baked (such as potato strips) are put into the cylinder 111 of the container body 11. Then, the cover plate 21 of the heating device 20 covers the container body 11 of the inner pot assembly 10 with the insertion hole 42 of the coupler 40 being inserted by the driven shaft 13. After the heating device 20 is powered, the electric heating tube 24 rises its temperature to generate hot air, and the impeller 23 rotates to blow the hot air toward the food items. The rotation of the driving spindle 221 of the motor 22 drives the driven shaft 13 to rotate accordingly. The rotating speed of the driven shaft 13 is reduced by the gears of the speed-reducing mechanism 14, thereby making the rotatable sleeve 12 to drive the stirring member 15 and its blades 152 to rotate at a lower speed. Each of the blades 152 stirs the food items slowly, so that the food items received in the cylinder 111 can be heated and baked uniformly.

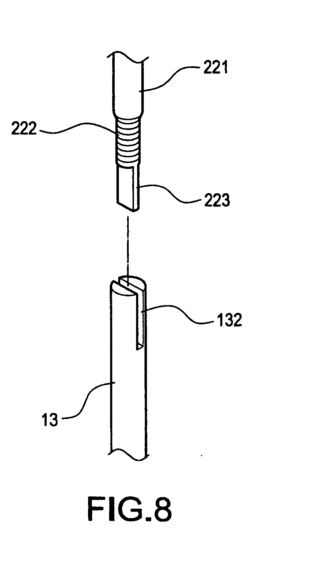

Please refer to FIG. 8, which shows another embodiment of the driving spindle 221 and the driven shaft 13 of the present invention. The free end of the driven shaft 13 protrudes from the stirring member 15 (this case is not shown) or is in flush with the top surface of the central base 151 of the stirring member 15 (this case is not shown). The free end of the driven shaft 13 is provided with an insertion slot 132. Further, the front end of the driving spindle 221 of the motor 22 extends to form an inserting plate 223, which is inserted into the insertion slot 132. With this arrangement, the same effect as that of the aforesaid coupler 40 can be achieved. Alternatively, the free end of the driven shaft 13 protrudes outside the stirring member 15 (not shown) and is provided with an insertion slot 132.

## Claims

1. An inner pot assembly (10) for a hot-air baking oven (1), comprising:
a container body (11) with a bottom having a shaft mount (114);
a rotatable sleeve (12) penetrating the shaft mount (114) to be rotatable with respect to the shaft mount (114);
a driven shaft (13) penetrating the rotatable sleeve (12) to be rotatable with respect to the rotatable sleeve (12);
a speed-reducing mechanism (14) fixed to the container body (11), the speed-reducing mechanism (14) having a speed-reducing gear set (143) driven by the driven shaft (13) and driving the rotatable sleeve (12) to rotate; and
a stirring member (15) connected to the rotatable sleeve (12) and received in the container body (11), the stirring member (15) being driven by the rotatable sleeve (12).

2. The inner pot assembly (10) for a hot-air baking oven (1) according to claim 1, wherein the container body (11) comprises a cylinder (111) having a closed end and a base plate (112) fixed to the cylinder (111), the shaft mount (114) is formed on the base plate (112), a bottom of the cylinder (111) protrudes to form a hollow post (113), and the hollow post (113) allows the rotatable sleeve (12) to penetrate there through and is located to face the shaft mount (114).

3. The inner pot assembly (10) for a hot-air baking oven (1) according to claim 1 or 2, wherein a free end of the driven shaft (13) protrudes outside the stirring member (15) and is formed with a positioning plane (131).

4. The inner pot assembly (10) for a hot-air baking oven (1) according to claim 1 or 2, wherein a free end of the driven shaft (13) protrudes outside the stirring member (15) and is provided with an insertion slot (132).

5. A hot-air baking oven (1) having an inner pot assembly (10), comprising:
an outer pot (30) having a chamber (32) therein;
a heating device (20) has a cover plate (21) covering the outer pot (30) and a motor (22) mounted over the cover plate (21), the motor (22) having a driving spindle (221); and
an inner pot assembly (10) according to any of the preceding claims, said inner pot assembly (10) being received in said chamber (32).

6. The hot-air baking oven (1) having an inner pot assembly (10) according to claim 5, further comprising a coupler (40), one end of the coupler (40) being provided with an inner thread (41) and a distal end of the driving spindle (221) extending to form an outer thread (222) for threadedly connecting with the inner thread (41).

7. The hot-air baking oven (1) having an inner pot assembly (10) according to claim 6, wherein a free end of the driven shaft (13) protrudes outside the stirring member (15) and is formed with a positioning plane (131), the other end of the coupler (40) is provided with an insertion hole (42) and an inner wall of the insertion hole (42) is formed with a restricting plane (421) for mating with the positioning plane (131).

8. The hot-air baking oven (1) having an inner pot assembly (10) according to claim 6, wherein a free end of the driven shaft (13) is provided with an insertion slot (132), a front end of the driving spindle (221) of the motor (22) extends to form an inserting plate (223), and the inserting plate (223) is inserted into the insertion slot (132).

9. The hot-air baking oven (1) having an inner pot assembly (10) according to claim 6, wherein a free end of the driven shaft (13) protrudes outside the stirring member (15) and is provided with an insertion slot (132), a front end of the driving spindle (221) of the motor (22) extends to form an inserting plate (223), and the inserting plate (223) is inserted into the insertion slot (132).

## Patentansprüche

1. Innentopfeinheit (10) für einen Heissluftbackofen (1), umfassend:
einen Behälterkörper (11) mit einem Boden, der ein Achsenlager (114) aufweist;
eine drehbewegliche Hülse (12), die sich durch das Achsenlager (114) hindurch erstreckt, sodass diese relativ zu dem Achsenlager (114) drehbeweglich ist;
eine angetriebene Achse (13), welche sich durch die drehbewegliche Hülse (12) hindurch erstreckt, sodass diese relativ zu der drehbeweglichen Hülse (12) drehbeweglich ist;
ein Untersetzungsgetriebe (14), das an dem Behälterkörper (11) befestigt ist, wobei das Untersetzungsgetriebe (14) eine Untersetzungsgetriebe-Zahnradgruppe (143) aufweist, die von der angetriebenen Achse (13) wird und die Drehbewegung der drehbeweglichen Hülse (12) antriebt;
eine Rührteil (15), das mit der drehbeweglichen Hülse (12) verbunden ist und in dem Behälterkörper (11) aufgenommen ist, wobei das Rührteil (15) von der drehbeweglichen Hülse (12) angetrieben ist.

2. Innentopfeinheit (10) für einen Heissluftbackofen (1) nach Anspruch 1, wobei der Behälterkörper (11) einen Zylinder (111) mit einer geschlossenen Stirnseite und einer an dem Zylinder (111) befestigten Grundplatte (112) aufweist, wobei das Achsenlager (114) auf der Grundplatte (112) ausgebildet ist, eine Unterseite des Zylinders (111) vorsteht, um eine hohle Säule (113) auszubilden, und wobei die hohle Säule (113) ermöglicht, dass die drehbewegliche Hülse (12) sich in diesem Bereich hindurch erstrecken kann und sich gegenüberliegend zu dem Achslager (114) befindet.

3. Innentopfeinheit (10) für einen Heissluftbackofen (1) nach Anspruch 1 oder 2, wobei ein freies Ende der angetriebenen Achse (13) zur Außenseite des Rührteils (15) abragt und mit einer Positionierungsfläche (131) ausgebildet ist.

4. Innentopfeinheit (10) für einen Heissluftbackofen (1) nach Anspruch 1 oder 2, wobei ein freies Ende der angetriebenen Achse (13) zur Außenseite des Rührteils (15) abragt und mit einen Einführungsnut (132) versehen ist.

5. Heissluftbackofen (1) mit einer Innentopfeinheit (10), umfassend:
einen Außentopf (30) mit einer darin befindlichen Kammer (32);
eine Heizeinrichtung (20) mit einer Abdeckplatte (21), welche den Außentopf (30) abdeckt, und einem auf der Abdeckplatte (21) angebrachten Motor (22), wobei der Motor eine Antriebswelle (221) aufweist; und
eine Innentopfeinheit (10) nach einem der vorhergehenden Ansprüche, wobei die Innentopfeinheit (10) in der Kammer (32) aufgenommen ist.

6. Heissluftbackofon (1) mit einer Innentopfeinheit (10) nach Anspruch 5, weiterhin umfassend ein Kopplungsteil (40), wobei ein Ende des Kopplungsteils (40) mit einem Innengewinde (41) versehen ist und das distale Ende der Antriebswelle (221) verlängert ist, um ein Außengewinde (222) auszubilden, das durch einen Schraubeingriff mit dem Innengewinde (41) verbindet.

7. Heissluftbackofen (1) mit einer Innentopfeinheit (10) nach Anspruch 6, wobei ein freies Ende der angetriebenen Achse (13) zur Außenseite des Rührteils (15) abragt und mit einer Positionierungsfläche (131) ausgebildet ist, das andere Ende des Kopplungsteils (40) mit einer Einführbohrung (42) versehen ist und eine Innenwand der Einführbohrung (42) mit einer Begrenzungsfläche (421) ausgebildet ist, die auf die Positionierungsfläche (131) passend abgestimmt ist.

8. Heissluftbackofen (1) mit einer Innentopfeinheit (10) nach Anspruch 6, wobei ein freies Ende der angetriebenen Achse (13) mit einer Einführnut (132) versehen ist, ein vorderes Ende der Antriebswelle (221) des Motors (22) verlängert ist, um eine Einführfläche (223) auszubilden und die Einführfläche (223) in die Einführnut (132) eingeführt ist.

9. Heissluftbackofen (1) mit einer Innentopfeinheit (10) nach Anspruch 6, wobei ein freies Ende der angetriebenen Achse (13) zur Außenseite des Rührteils (15) abragt und mit einer Einführnut (132) versehen ist, ein vorderes Ende der Antriebswelle (221) des Motors (22) verlängert ist, um eine Einführfläche (223) auszubilden und die Einführfläche (223) in die Einführnut (132) eingeführt ist.

## Revendications

1. Ensemble de pot interne (10) pour un four de cuisson à air-chaud (1), comprenant:
un corps de réservoir (11) ayant un bas doté d'une monture d'arbre (114);
un manchon rotatif (12) s'engageant dans la monture d'arbre (114) de manière rotative par rapport à la monture d'arbre (114);
un arbre d'entraînement (13) s'engageant dans le manchon rotatif (12) de manière rotative par rapport au manchon rotatif (12);
un dispositif de réduction de vitesse (14) fixé sur le corps du réservoir (11), le mécanisme de réduction de vitesse (14) disposant d'un jeu d'engrenages à réduction de vitesse (143) entraîné par l'arbre d'entraînement (13) et entraînant en rotation le manchon rotatif (12); et
un élément de brassage (15) fixé au manchon rotatif (12) et disposé dans le corps de réservoir (11), l'élément de brassage (15) étant actionné par le manchon rotatif (12).

2. L'ensemble de pot interne (10) pour un four de cuisson à air-chaud (1) selon la revendication 1, dans lequel le corps de réservoir (11) comprend un cylindre (111) ayant une extrémité fermée et une plaque de base (112) fixée au cylindre (111), la monture d'arbre (114) étant formée sur la plaque de base (112), le bas du cylindre (111) formant en saillie un bossage creux (113), et le bossage creux (113) permettant au manchon rotatif (12) de s'y engager au travers face à la monture d'arbre (114).

3. L'ensemble de pot interne (10) pour un four de cuisson à air-chaud (1) selon la revendication 1 ou 2, dans lequel une extrémité libre de l'arbre d'entraînement (13) se dégage en saillie par rapport à l'élément de brassage (15) et est formé avec une plaque de positionnement (131).

4. L'ensemble de pot interne (10) pour un four de cuisson à air-chaud (1) selon la revendication 1 ou 2, dans lequel une extrémité libre de l'arbre d'entraînement (13) se dégage en saillie par rapport à l'élément de brassage (15) et est fourni avec une fente d'insertion.

5. Un four de cuisson à air-chaud (1) disposant d'un ensemble de pot interne (10), comprenant:
un pot externe (30) disposant d'une chambre (32) en son sein;
un dispositif de cuisson (20) disposant d'une platine de couverture (21) recouvrant le pot externe (30) et un moteur (22) monté sur la platine de couverture (21), le moteur (22) disposant d'un axe d'entraînement (221); et
un ensemble de pot interne (10) selon l'une quelconque des revendications précédentes, ledit ensemble de pot interne étant réceptionné au sein de ladite chambre (32).

6. Le four de cuisson à air-chaud (1) disposant d'un ensemble de pot interne (10) selon la revendication 5, comportant en outre un coupleur (40), dont une extrémité du coupleur (40) est dotée d'un filetage interne (41), et dont une extrémité distale de l'axe d'entraînement (221) s'étend de manière à former un filetage externe (222) pour la fixation par filetage avec le filetage interne (41).

7. Le four de cuisson à air-chaud (1) disposant d'un ensemble de pot interne (10) selon la revendication 6, dans lequel une extrémité libre de l'arbre d'entraînement (13) se dégage en saillie par rapport à l'élément de brassage (15) et est formé avec une plaque de positionnement (131), l'autre extrémité du coupleur (40) comporte un orifice d'insertion (42) et une paroi interne de l'orifice d'insertion (42) est formée avec un plan de limitation (421) pour la correspondance avec le plan de positionnement (131).

8. Le four de cuisson à air-chaud (1) disposant d'un ensemble de pot interne (10) selon la revendication 6, dans lequel une extrémité libre de l'arbre d'entraînement (13) dispose d'une fente d'insertion (132), une extrémité avant de l'axe d'entraînement (221) du moteur (22) s'étendant de manière à constituer une plaque d'insertion (223), et la plaque d'insertion (223) étant engagée dans la fente d'insertion (132).

9. Le four de cuisson à air-chaud (1) disposant d'un ensemble de pot interne (10) selon la revendication 6, dans lequel une extrémité libre de l'arbre d'entraînement (13) s'étend en saillie à l'extérieur de l'élément de brassage (15) et dispose d'une fente d'insertion (132), une extrémité avant de l'axe d'entraînement (221) du moteur (22) s'étendant de manière à constituer une plaque d'insertion (223), et la plaque d'insertion (223) étant engagée dans la fente d'insertion (132).
